# EUROPÄISCHE PATENTANMELDUNG

(11) **EP 0 816 702 A2**
(43) Veröffentlichungstag der Anmeldung: **07.01.1998**
(21) Anmeldenummer: 97109335.6
(22) Anmeldetag: 10.06.1997
(51) Int. Cl.: F16D 3/72

(54) **Flexible Wellenkupplung**

(30) Priorität: 25.06.1996 DE 19625319
(71) Anmelder: ATEC-Weiss GmbH & Co. KG, D-48691 Vreden (DE)
(72) Erfinder: Weiss, Rudolf, 48691 Vreden (DE); Uhlen, Stefan, 49740 Haselünne (DE)
(74) Vertreter: Cohausz & Florack

(57) **Zusammenfassung**

Gegenstand der Erfindung ist eine flexible Wellenkupplung mit zwei Flanschteilen und einem zwischen den Flanschteilen angeordneten, das Drehmoment übertragenden Rohrteil aus faserverstärktem Kunststoff. Um eine Kupplung dieser Art schnell und paßgenau an verschiedene oder geänderte Abstände der miteinander zu kuppelnden Maschinenelemente anpassen zu können, wird vorgeschlagen, daß die Flanschteile (1, 2) aus Stahl bestehen, und die Enden (16, 17) des Rohrteils (3) mit den Flanschteilen unter Verwendung von das jeweilige Rohrende umschließenden Stahlringen (10, 11) verklebt sind. Das Rohrteil (3) wird dabei mittels einer Säge oder dergleichen entsprechend dem Abstand der zu kuppelnden Maschinenteile gekürzt und sodann mit den Flanschteilen (1, 2) verklebt.

## Beschreibung

Die Erfindung betrifft eine flexible Wellenkupplung mit zwei Flanschteilen und einem zwischen den Flanschteilen angeordneten, das Drehmoment übertragenden Rohrteil aus faserverstärktem Kunststoff.

Eine derartige Wellenkupplung ist aus der EP 0 534 927 B1 bekannt. Die dort beschriebene Kupplung umfaßt einen mittleren Rohrteil und zwei stirnseitig anschließende Flanschteile, wobei die Rohr- und Flanschteile jeweils aus faserverstärktem Kunststoff bestehen. Zur Vereinfachung der Herstellung und zur besseren Anpaßbarkeit der jeweiligen Eigenschaften der Rohr- und Flanschteile an unterschiedliche Bedingungen werden die Rohr- und Flanschteile voneinander getrennt gefertigt und miteinander unter Verwendung einer ebenfalls aus faserverstärktem Kunststoff bestehenden Muffe verklebt. Aufgrund der Biegefähigkeit ihrer Kunststoffteile kann diese bekannte Wellenkupplung einen Axialversatz der durch sie gekuppelten Antriebsteile bis zu einem bestimmten Grad ausgleichen. Es ist jedoch nicht möglich, diese Kupplung an verschiedene oder geänderte Abstände der miteinander zu kuppelnden Antriebsteile anzupassen.

Der Erfindung liegt daher die Aufgabe zugrunde, eine Wellenkupplung der eingangs genannten Art zu schaffen, die eine schnelle und paßgenaue Längenanpassung an verschiedene oder geänderte Abstände der miteinander zu kuppelnden Maschinenteile ermöglicht.

Erfindungsgemäß wird diese Aufgabe dadurch gelöst, daß die Flanschteile aus Stahl bestehen, und die Enden des Rohrteils mit den Flanschteilen unter Verwendung von das jeweilige Rohrende umschließenden Stahlringen verklebt sind.

Die erfindungsgemäße Lösung ermöglicht eine schnelle und flexible Anpassung der Kupplungslänge, indem das Rohrteil mittels einer Säge oder dergleichen ensprechend dem Abstand der zu kuppelnden Maschinenteile gekürzt und sodann mit den Flanschteilen verklebt wird.

Diese flexible und paßgenaue Anpassungsfähigkeit ist nicht nur bei der Erstmontage der Wellenkupplung, sondern auch bei einer eventuellen späteren Veränderung des Abstandes zwischen den zu kuppelnden Maschinenteilen von Vorteil. Im Gegensatz zu der aus der EP 0 534 927 bekannten Kupplung, läßt sich das verklebte Rohrteil bei der erfindungsgemäßen Kupplung mit geeigneten Werkzeugen von den Flanschteilen abtrennen, ohne Gefahr zu laufen, daß die Flanschteile dabei zerstört werden. Aufgrund des Stahlmaterials verfügen die Flanschteile über eine ausreichende Härte, die ein selektives Abtrennen der relativ weichen faserverstärkten Kunststoffrohrenden von den Flanschteilen mittels einer Fräsvorrichtung oder dergleichen gestattet. Die Flanschteile können als Standardteile in Verbindung mit einem neuen Rohrteil weiter verwendet werden. Auf diese Weise läßt sich eine schnelle und kostengünstige Anpassung an geänderte Betriebsverhältnisse vornehmen.

Eine bevorzugte Ausgestaltung der erfindungsgemäßen Wellenkupplung besteht darin, daß die Flanschteile jeweils einen Ansatzstutzen aufweisen, an dessen Außenseite ein umlaufender Absatz ausgebildet ist. Diese Ausgestaltung ermöglicht eine feste doppelschnittige Verklebung des faserverstärkten Kunststoffrohres, indem dessen Enden unter Verwendung der Stahlringe auf die mit geeignetem Kleber versehenen Absätze der Ansatzstutzen aufgeschoben werden, wobei die innenseitig ebenfalls mit Kleber versehenen Stahlringe die Rohrenden überlappen und mit den Stahlflanschteilen verschweißt oder verklebt werden.

Weitere vorteilhafte Ausgestaltungen der erfindungsgemäßen Wellenkupplung sind in den Unteransprüchen gekennzeichnet.

Nachstehend wird die Erfindung anhand von Ausführungsbeispielen und mit Bezug auf die beiliegende Zeichnung näher erläutert. Es zeigen:
- Fig. 1: einen Längsschnitt durch eine erfindungsgemäße Wellenkupplung gemäß einem ersten Ausführungsbeispiel; und
- Fig. 2: einen Längsschnitt durch eine erfindungsgemäße Wellenkupplung gemäß einem zweiten Ausführungsbeispiel.

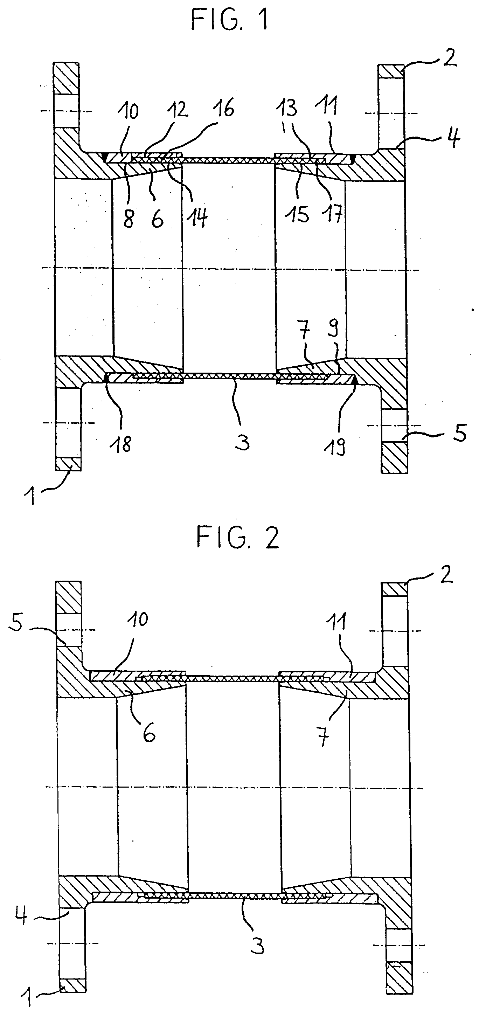

Die in Fig. 1 dargestellte Wellenkupplung besteht aus zwei Stahlflanschen 1 und 2, die durch ein faserverstärktes Kunststoffrohr 3 drehstarr und biegeelastisch miteinander verbunden sind. Die Stahlflansche sind am Umfang mit Bohrungen 4 und 5 unterschiedlichen Durchmessers versehen, die eine wechselseitige Verschraubung der Flansche 1 und 2 mit den zu kuppelnden Maschinenteilen unter Verwendung von Lamellenpaketkränzen (nicht gezeigt) gestatten.

Die Ansatzstutzen 6 und 7 der Stahlflansche sind außenseitig mit Absätzen 8 und 9 versehen, auf die jeweils ein Stahlring 10 bzw. 11 aufgeschoben ist. Die Stahlringe weisen an ihren Innenseiten ebenfalls Absätze 12 und 13 auf, die zusammen mit den zugehörigen Ansatzstutzen Ringräume 14 und 15 bilden, in die jeweils ein Ende des Kunststoffrohres 3 mit ausreichender Überlappung eingreift. Die Überlappung kann beispielsweise etwa 30 mm betragen.

Die Enden 16 und 17 des vorzugsweise mit Glasfasern verstärkten Kunststoffrohres 3 sind innenseitig mit den Ansatzstutzen 6 bzw. 7 und außenseitig mit den muffenförmigen Stahlringen 10 bzw. 11 verklebt. Auf diese Weise ergibt sich eine doppelschnittige Verklebung, die sich durch eine relativ hohe Festigkeit auszeichnet. Die Stahlringe 10 und 11 sind ihrerseits durch umlaufende Schweißnähte 18 und 19 mit den Stahlflanschen verbunden.

Alternativ können die Stahlringe 10 und 11 mit den Stahlflanschen 1 und 2 auch verklebt werden (vgl. Fig. 2). Die Klebeflächen sind dabei entsprechend dem zu übertragenden Drehmoment zu dimensionieren.

## Patentansprüche

1. Flexible Wellenkupplung mit zwei Flanschteilen und einem zwischen den Flanschteilen angeordneten, das Drehmoment übertragenden Rohrteil aus faserverstärktem Kunststoff,
**dadurch gekennzeichnet**, daß die Flanschteile (1, 2) aus Stahl bestehen, und die Enden (16, 17) des Rohrteils (3) mit den Flanschteilen unter Verwendung von das jeweilige Rohrende umschließenden Stahlringen (10, 11) verklebt sind.

2. Flexible Wellenkupplung nach Anspruch 1,
**dadurch gekennzeichnet**, daß die Flanschteile (1, 2) jeweils einen Ansatzstutzen (6, 7) aufweisen, an dessen Außenseite ein umlaufender Absatz (8, 9) ausgebildet ist.

3. Flexible Wellenkupplung nach Anspruch 1 oder 2,
**dadurch gekennzeichnet**, daß die Stahlringe (10, 11) mit den Flanschteilen (1, 2) Ringräume (14, 15) bilden, in welche die Rohrenden (16, 17) eingreifen.

4. Flexible Wellenkupplung nach einem der vorangehenden Ansprüche,
**dadurch gekennzeichnet**, daß die Stahlringe (10, 11) mit dem jeweiligen Flanschteil (1, 2) verschweißt oder verklebt sind.

5. Flexible Wellenkupplung nach einem der vorangehenden Ansprüche,
**dadurch gekennzeichnet**, daß die Stahlringe (10, 11) mit dem jeweiligen Rohrende (16, 17) verklebt sind.
